**Europäisches Patentamt**

**European Patent Office**

**Office européen des brevets**

(19)

(11) **EP 1 724 943 A1**

(12) **EUROPEAN PATENT APPLICATION**

(43) Date of publication:
**22.11.2006  Bulletin 2006/47**

(51) Int Cl.:
**H04B 7/06** (2006.01)

(21) Application number: **05253080.5**

(22) Date of filing: **18.05.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventors:<br>• **Sarris, Ioannis**<br>  **BS1 5TU, Bristol, Avon (GB)**<br>• **Nix, Andrew c/o Dep. of Electrical & Electr. Engin**<br>  **Bristol BS8 1UB (GB)** |
| (71) Applicants:<br>• **Mitsubishi Electric Information Technology Centre Europe B.V.**<br>  **Guildford GU2 7YD (GB)**<br>  Designated Contracting States:<br>  **GB**<br>• **MITSUBISHI DENKI KABUSHIKI KAISHA Chiyoda-ku Tokyo 100-8310 (JP)**<br>  Designated Contracting States:<br>  **AT BE BG CH CY CZ DE DK EE ES FI FR GR HU IE IS IT LI LT LU MC NL PL PT RO SE SI SK TR** | (74) Representative: **Burke, Steven David et al**<br>**R.G.C. Jenkins & Co.**<br>**26 Caxton Street**<br>**London SW1H 0RJ (GB)** |

(54) **Multiple input-multiple output communication system**

(57)    A wireless communication system, and a method of arranging such a system, comprising a transmitter and a receiver. The transmitter includes first means for transmitting a first data stream multiplexed with a carrier wave having a wavelength λ and second means for transmitting a second data stream multiplexed with the carrier wave. The receiver comprises third means for receiving the first and second data streams and for providing a first output signal and fourth means for receiving the first and second data streams and for providing a second output signal. The first, second, third and fourth means are arranged to substantially satisfy the equation:

$$\left| d_{1,1} - d_{1,2} + d_{2,2} - d_{2,1} \right| = (2r + 1)\frac{\lambda}{2} \text{ for } r = 0,1,2,3,\ldots$$

where $d_{1,1}$ is the spacing between the first and third means,
$d_{1,2}$ is the spacing between the second and third means,
$d_{2,2}$ is the spacing between the second and fourth means, and $d_{2,1}$ is the spacing between the first and fourth means.

**EP 1 724 943 A1**

**X**      **H**      **y**

$n_1$

$x_1$ ⟶ $h_{1,1}$ ⟶ $y_1$

$h_{2,1}$

$h_{N_{Rx},1}$

$h_{1,2}$

$x_2$ ⟶ $h_{2,2}$ ⟶ $y_2$

$h_{N_{Rx},2}$

$n_2$

$h_{2,N_{Tx}}$

$x_{N_{Tx}}$ ⟶ $h_{2,N_{Tx}}$

$h_{N_{Rx},N_{Tx}}$ ⟶ $y_{N_{Rx}}$

$n_{N_{Rx}}$

**FIGURE 1**

## Description

### Field of the Invention

The present invention relates to multiple input-multiple output (MIMO) communication systems, in particular, arrangements for line-of-sight environments. The invention further relates to a method of arranging such a system.

### Background

SISO (single input, single output) refers to a wireless communications system in which one antenna is used at the source (transmitter) and one antenna is used at the destination (receiver). SISO is the simplest antenna technology. In some environments, SISO systems are vulnerable to problems caused by multipath effects. When an electromagnetic field is met with obstructions such as hills, canyons, buildings and utility wires, the wavefronts are scattered and they take many paths to reach the destination. The late arrival of scattered portions of the signal causes problems such as fading, cutout (cliff effect) and intermittent reception (picket fencing). In a digital communications system, it can cause a reduction in data speed and an increase in the number of errors.

In order to minimize or eliminate problems caused by multipath wave propagation, smart antenna technology is used. There are three forms of smart antenna, known as SIMO (single input, multiple output), MISO (multiple input, single output) and MIMO (multiple input, multiple output).

MIMO is an antenna technology for wireless communications in which multiple antennas are used at both the source and the destination. The antennas at each end of the communications circuit are combined to minimize errors and optimise data speed. The use of two or more antennas, along with the transmission of multiple signals (one for each antenna) at the source and the destination, eliminates the trouble caused by multipath wave propagation and can even take advantage of this effect.

MIMO technology has aroused interest because of its possible applications in digital television, wireless local area networks (WLANs), metropolitan area networks and mobile communications.

Predictions of spectrum requirements for wireless cellular networks show there will be a large shortfall by 2010, if not before. At the same time, the rapid growth of WLANs will probably lead to similar spectrum shortages for this application. The increasingly crowded spectrum means that making new channels available is increasingly difficult, thus the demand will only be met if the spectrum efficiency of wireless systems can be increased.

It is has been shown by Emre Telatar in "Capacity of Multi-antenna Gaussian Channels", European Transactions on Telecommunications, Vol. 10, No. 6, pp. 585-595, Nov/Dec 1999 and D. Gesbert, H. Bölcskei, D. A. Gore, and A. J. Paulraj in "MIMO wireless channels: Capacity and performance prediction," IEEE Globecom 2000, San Francisco, CA, pp. 1083-1088, Nov. 2000, that MIMO wireless channels, in which multi-element antenna arrays are used at both ends of the link, can in principle offer spectral efficiencies an order of magnitude above those available to conventional single antenna systems. In essence, MIMO channels provide a technique for boosting wireless bandwidth and range by taking advantage of multiplexing. MIMO algorithms send information over two or more antennas. The signals reflect off objects creating multiple paths that in conventional radios cause interference and fading. MIMO techniques use these paths to carry more information, which is recombined on the receiving side by the MIMO algorithms.

The concept assumes that unique (but appropriately encoded) data is sent from each transmit antenna and a suitable algorithm is applied after the receive array to decode the multiple observations and recover the original data stream. This approach differs from previously known diversity antennas in that it is possible, at least in principle, to achieve a linear increase in capacity (as a function of the number of transmit and receive elements) along with improved diversity. However, there are many factors that can limit these capacities making MIMO unsuitable for some environments or scenarios. The potential capacity depends strongly on the environment in which the system is deployed since a relatively large number of distinct paths between the transmitter and receiver are required in order for a MIMO system to achieve capacities near the theoretic values based on the independent identically distributed (i.i.d) Rayleigh fading model.

To quantify the benefits of MIMO wireless communication systems, a large number of studies has been carried out, with most focusing on the 2 and 5 GHz bands. When operating at 60 GHz (suitable for short-range indoor communications), the main difference between the 2-5 GHz and the 60 GHz frequency bands from a propagation point-of-view is that in the latter, free-space path loss and losses due to reflections are much higher. Additionally, the effect of oxygen absorption at 60 GHz imposes a further loss on the received signal power. These characteristics limit the range of 60 GHz systems to such a degree that a Line-Of-Sight (LOS) is almost essential to provide a sufficiently strong signal at the receiver. However, previous investigations have shown that a LOS signal can reduce the capacity of a MIMO system dramatically. This can be accounted to the deterministic nature of the LOS signal which minimises the spatial diversity of the system, reducing the effective rank of the MIMO channel to one.

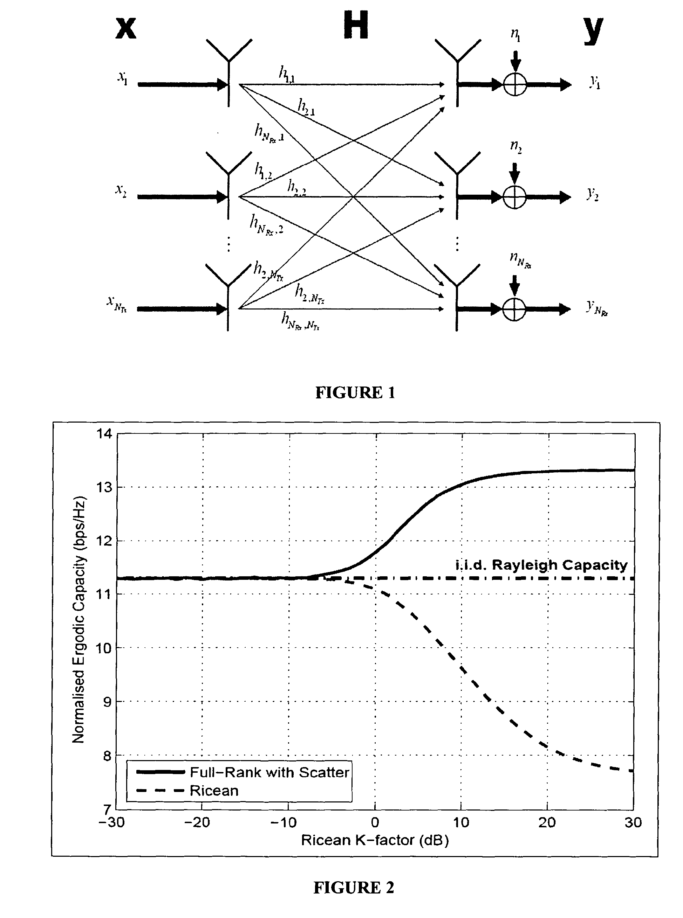

FIG. 1 shows a typical MIMO system with $N_{Tx}$ transmit and $N_{Rx}$ receive antenna elements ($N_{Tx}$ x $N_{Rx}$ MIMO).

In a MIMO system, the data x = $[x_1, x_2, ..., x_{NTx}]^T$ is sent in parallel from the transmit antenna elements. The narrowband impulse response between the transmit element $p$ and the receive element $q$ is represented by $h_{q,p}$. If $n_q$ is the noise on the receive element $q$ then the received signal $y_q$ can be found from the following equations:

$$y_1 = h_{1,1}x_1 + h_{1,2}x_2 + \ldots h_{1,Ntx}x_{Ntx} + n_1$$

$$y_2 = h_{2,1}x_1 + h_{2,2}x_2 + \ldots h_{2,Ntx}x_{Ntx} + n_2$$

$$y_{Ntx} = h_{Ntx,1}x_1 + h_{Ntx,2}x_2 + \ldots h_{Ntx,Ntx}x_{Ntx} + n_{Ntx}$$

Which in matrix form is equivalent to:

$$\mathbf{y} = \mathbf{Hx} + \mathbf{n} \qquad \text{Eq. (1)}$$

By modelling the channel matrix **H**, we can effectively explore methods that maximise the system's capacity. There is a sizeable body of literature on the subject of MIMO channel modelling, but most models make a number of assumptions, which can limit the insight on the performance of MIMO systems under specific circumstances.

In a non-LOS environment the response between two antenna elements can be modelled by a Rayleigh random variable (r.v.). Therefore, a simple way to construct a channel matrix is to assume that all responses are independent and identically distributed (i.i.d.) Rayleigh r.v. The assumption that lies behind this method is that there is no correlation between the signals and therefore many consider this to correspond to an ideal system (i.e., one that gives the maximum achievable capacity). Capacities near the i.i.d. Rayleigh capacity have been observed in non-LOS environments with a large number of scatterers (greater or equal to $N_{Tx}$ and $N_{Rx}$) and a sufficiently large inter-element spacing at both arrays.

In environments where the transmit and receive arrays are in LOS, the signals can be modelled stochastically by Rician r.v. The majority of publications have reported that the capacity of MIMO systems decreases with increasing power of the LOS signal. This prediction can be accounted to the fact that most channel models assume that the antenna arrays are electrically small and therefore the phases of the LOS signals at all receive elements are equal or statistically dependent. As a result, there is no diversity offered from the receive elements and the capacity of the system drops to that of a Multiple Input — Single Output (MISO) system.

The problem of rank reduction can be overcome by specifically placing the transmit and receive antenna elements in positions which result in the LOS signals between all elements being orthogonal to each other and therefore offering the maximum possible capacity. FIG. 2 shows the capacities of rank-one and full-rank systems as a function of the ratio of the power of the LOS signal over the power of multipath (i.e. the Rician K-factor) assuming a signal-to-noise ratio (SNR) of 20 dB. Note that subsequent results for capacities similarly assume an SNR of 20 dB. It is clear that the full-rank LOS systems can achieve very high capacities (much higher than i.i.d. Rayleigh). FIG. 2 shows that the presence of multipath can limit the capacity of a full-rank LOS system but the resulting capacity will always be higher than i.i.d.

Under some conditions, high capacities are still possible in LOS MIMO systems. For systems with fixed transmit and receive arrays a number of MIMO configurations that can achieve the maximum MIMO capacity have been identified by P.F. Driessen and G.J. Foschini, in "On the capacity formula for multiple input multiple output wireless channels: a geometric interpretation," IEEE Trans. Comm., vol. 47, pp. 173-176, Feb. 1999. J-S Jiang and M.A. Ingram in "Distributed Source Model (DSM) for Short-Range MIMO," IEEE Vehicular Tech. Conf., Orlando, FL, Oct. 2003, presented a model suitable for estimating the capacity of systems in LOS. Both studies have identified that high capacities are possible in LOS MIMO systems but the performance of these systems is sensitive to the exact positioning of the antenna elements. Consequently, such systems would prove unsuitable for most realistic applications.

There is a need in the art for an improved MIMO system that solves or at least mitigates the aforementioned problems.

## Summary Of The Invention

According to a first aspect of the invention, there is provided a wireless communication system comprising a transmitter and a receiver. The transmitter includes first means for transmitting a first data stream multiplexed with a carrier wave having a wavelength $\lambda$ and second means for transmitting a second data stream multiplexed with the carrier wave. The receiver comprises third means for receiving the first and second data streams and for providing a first output signal and fourth means for receiving the first and second data streams and for providing a second output signal. The first, second, third and fourth means are arranged to substantially satisfy the equation:

$$\left| d_{1,1} - d_{1,2} + d_{2,2} - d_{2,1} \right| = (2r + 1)\,\frac{\lambda}{2}\ \text{for } r = 0,1,2,3,\ldots$$

where $d_{1,1}$ is the spacing between the first and third means,
$d_{1,2}$ is the spacing between the second and third means,
$d_{2,2}$ is the spacing between the second and fourth means, and
$d_{2,1}$ is the spacing between the first and fourth means.

In a first embodiment, the first and second means are spaced apart by a distance $s_1$, the third and fourth means are spaced apart by a distance $s_2$, the first and second means are arranged parallel to the third and fourth means and spaced apart by a distance $d$. In this embodiment, $s_1$, $s_2$ and $d$ may be adapted to substantially satisfy the equation:

$$s_1 s_2 = \frac{\lambda\, d}{2}.$$

Note that in the case of an N x N MIMO,

$$s_1 s_2 = \frac{\lambda\, d}{N}$$

If $s_1 = s_2 = s$, then for a 2 x 2 MIMO,

$$s \approx \sqrt{\frac{\lambda\, d}{2}}$$

In this case, $s$ is preferably 7.9 cm, d is preferably 2.5 m and the frequency of the first and second data streams is preferably 60 GHz.
According to a second aspect, there is provided a wireless communication system, comprising a transmitter and a receiver. The transmitter comprises first means for transmitting a first data stream multiplexed with a carrier wave having a wavelength $\lambda$; second means for transmitting a second data stream multiplexed with the carrier wave; and third means for transmitting a third data stream multiplexed with the carrier wave. The receiver comprises fourth means for receiving the first, second and third data streams and for providing a first output signal; fifth means for receiving the first, second and third data streams and for providing a second output signal; and sixth means for receiving the first, second and third data streams and for providing a third output signal. The first, second, third, fourth, fifth and sixth means are arranged to substantially satisfy the equations:

$$\left| d_{1,1} - d_{2,1} + d_{1,2} - d_{2,2} + d_{1,3} - d_{2,3} \right| = (2r + 1)\,\frac{\lambda}{2}\ \text{for } r = 0,1,2,3,\ldots;$$

$$\left| d_{1,1} - d_{3,1} + d_{1,2} - d_{3,2} + d_{1,3} - d_{3,3} \right| = (2r + 1) \frac{\lambda}{2} \text{ for } r = 0,1,2,3,\ldots;$$

and

$$\left| d_{2,1} - d_{3,1} + d_{2,2} - d_{3,2} + d_{2,3} - d_{3,3} \right| = (2r + 1) \frac{\lambda}{2} \text{ for } r = 0,1,2,3,\ldots,$$

where $d_{1,1}$ is the spacing between the first and fourth means,
$d_{1,2}$ is the spacing between the second and fourth means,
$d_{2,2}$ is the spacing between the second and fifth means, and
$d_{2,1}$ is the spacing between the first and fifth means.
$d_{1,3}$ is the spacing between the third and fourth means,
$d_{2,3}$ is the spacing between the third and fifth means,
$d_{3,3}$ is the spacing between the third and sixth means,
$d_{3,1}$ is the spacing between the first and sixth means, and
$d_{3,2}$ is the spacing between the second and sixth means.

Preferably, the first, second and third means of the transmitter according to the second aspect are arranged in a triangular configuration in a first plane and the fourth, fifth and sixth means of the receiver are arranged in a triangular configuration in a second plane. Preferably, the first and second planes are parallel, in which case, the spacing between the first and second means, the second and third means, the first and third means, the fourth and fifth means, the fifth and sixth means and the fourth and sixth means is preferably 7.9 cm, the distance between the first and second planes is preferably 2.5 m and the frequency of the first and second data streams is 60 GHz.

According to a further embodiment, the system according to the second aspect is adapted so that the transmitter further comprises seventh means for transmitting a fourth data stream multiplexed with the carrier wave, the fourth, fifth and sixth means being arranged to receive the fourth data stream, and the receiver further comprising eighth means for receiving the first, second, third and fourth data streams and for providing a fourth output signal. The first, second, third and seventh means of this embodiment are preferably arranged to form a first tetrahedron and the fourth, fifth, sixth and eighth means are preferably arranged to form a second tetrahedron. More preferably, the spacing between the first and second means, the first and third means, the second and third means, the seventh and first means, the seventh and third means and the seventh and second means is 10 cm; the spacing between the fourth and fifth means, the fourth and sixth means, the fifth and sixth means, the fourth and eighth means, the fifth and eighth means and the sixth and eighth means is 5 cm; the tetrahedra are arranged with opposing vertices with their bases having a separation of 2.5 m; and the frequency of the first and second data streams is 60 GHz.

Where the receiver comprises more than two receiver elements, the receiver preferably includes means for selectively combining two or more of the output signals such that a subset of the total number of signals may be combined.

According to a third aspect, there is provided a method of arranging a communication system. The communication system comprises a transmitter having first means for transmitting a first data stream multiplexed with a carrier wave having a wavelength $\lambda$ and second means for transmitting a second data stream multiplexed with the carrier wave, and a receiver having third means for receiving the first and second data streams and for providing a first output signal and fourth means for receiving the first and second data streams and for providing a second output signal. The method comprises arranging the first, second, third and fourth means to substantially satisfy the equation:

$$\left| d_{1,1} - d_{1,2} + d_{2,2} - d_{2,1} \right| = (2r + 1) \frac{\lambda}{2} \text{ for } r = 0,1,2,3,\ldots$$

where $d_{1,1}$ is the spacing between the first and third means,
$d_{1,2}$ is the spacing between the second and third means,
$d_{2,2}$ is the spacing between the second and fourth means, and
$d_{2,1}$ is the spacing between the first and fourth means.

According to a fourth aspect, there is provided a receiver for a multiple input-multiple output communication system comprising first means for receiving first and second data streams and second means for receiving the first and second data streams, the first and second data streams having been multiplexed with a carrier wave having a wavelength $\lambda$ The first and second means are arranged to satisfy the equation:

$$\left| d_{1,1} - d_{1,2} + d_{2,2} - d_{2,1} \right| = (2r + 1)\,\frac{\lambda}{2} \ \text{ for } r = 0,1,2,3,\ldots$$

where $d_{1,1}$ is the spacing between the source of the first data stream and the first means,
$d_{1,2}$ is the spacing between the source of the second data stream and the first means,
$d_{2,2}$ is the spacing between the source of the second data stream and the second means, and
$d_{2,1}$ is the spacing between the source of the first data stream and the second means.

According to a fifth aspect, there is provided a transmitter for a multiple input-multiple output communication system comprising first means for transmitting a first data stream multiplexed with a carrier wave having a wavelength $\lambda$ to first and second means for receiving, and second means for transmitting a second data stream multiplexed with the carrier wave to the first and second means for receiving. The first and second means for transmitting are arranged to substantially satisfy the equation:

$$\left| d_{1,1} - d_{1,2} + d_{2,2} - d_{2,1} \right| = (2r + 1)\,\frac{\lambda}{2} \ \text{ for } r = 0,1,2,3,\ldots$$

where $d_{1,1}$ is the spacing between the first means for transmitting and the first means for receiving,
$d_{1,2}$ is the spacing between the second means for transmitting and the first means for receiving,
$d_{2,2}$ is the spacing between the second means for transmitting and second means for receiving, and
$d_{2,1}$ is the spacing between the second means for transmitting and the second means for receiving.

According to a sixth aspect, there is provided a receiver comprising a plurality of receiver elements, each antenna element being operable to receive a plurality of data streams and to provide an output signal, and means for selecting a subset of the elements based on the output signals. Control means are provided for altering the selected subset so that the following equation is substantially satisfied:

$$\left| d_{1,1} - d_{1,2} + d_{2,2} - d_{2,1} \right| = (2r + 1)\,\frac{\lambda}{2} \ \text{ for } r = 0,1,2,3,\ldots$$

where $d_{1,1}$ is the spacing between a first element of the subset and a first means for transmitting a first one of the plurality of data streams,
$d_{1,2}$ is the spacing between a second element of the subset and the first means for transmitting,
$d_{2,2}$ is the spacing between the second element and a second means for transmitting a second one of the plurality of data streams, and
$d_{2,1}$ is the spacing between the first element and the second means for transmitting.

According to a seventh aspect, there is provided a MIMO system including the receiver of the fourth or sixth aspects and / or the transmitter of the fifth aspect.

**Brief Description of the Drawings**

The features, objects, and advantages of the present invention will become more apparent from the detailed description set forth below when taken in conjunction with the drawings in which like reference characters identify correspondingly throughout and wherein:

FIG. 1 shows a configuration of a typical MIMO system;

FIG. 2 shows the variation of capacity in a LOS channel;

FIG.s 3a and 3b show point-source and distributed-source arrangements;

FIG. 4 shows a 2 x 2 MIMO system;

FIG. 5 is a chart of capacity as a function of the spacing at the receiver array, wherein the carrier frequency is 5.2 GHz;

FIG. 6 is a chart of capacity as a function of the spacing at both the arrays, wherein the carrier frequency is 5.2 GHz;

FIG. 7 shows a rectangular 2x2 MIMO system;

FIG. 8 shows a chart of the spacing required to achieve maximum capacity as a function of T-R distance;

FIG. 9 shows a 2 x 2 MIMO system with the transmit and receive arrays at random angles;

FIG. 10 shows a 2 x 2 MIMO system according to a first embodiment of the invention;

FIG. 11 is a chart of the variation of capacity of the system according to the first embodiment as a function of the positioning of the receive array on the x-y plane;

FIG. 12 shows a 2 x 2 MIMO system with perpendicular transmit and receive arrays;

FIG. 13 is a chart of the variation of capacity of the system according of FIG. 12 as a function of the positioning of the receive array on the x-y plane;

FIG. 14 shows a 3 x 3 MIMO system according to a second embodiment of the invention;

FIG. 15 is a chart of the variation of capacity of the system according to the second embodiment as a function of the positioning of the receive array on the x-y plane;

FIG. 16 shows a MIMO system according to a fourth embodiment of the invention;

FIG. 17 is a chart of the variation of capacity of the system according to the third embodiment as a function of the positioning of the receive array on the x-y plane; and

FIG.s 18, 19 and 20 are charts of the variation of capacity as a function of the angle for 2 x 2, 3 x 3 and 4 x 4 subchannels, respectively, wherein the carrier frequency is 5.2 GHz.

## Detailed Description

The present invention is particularly directed to communications in the 5.2 GHz and the 60 GHz bands. However, the scope of the invention is not to be limited to these bands and, as the skilled man will be aware, embodiments of the present invention may be applied to other frequency bands.

In the following description, a number of closed form expressions are derived, relating the performance of MIMO systems (in terms of capacity and probability of error) in pure LOS channels with the positioning of the antenna elements. From these expressions, the criteria for maximising the performance of LOS MIMO systems are derived, thereby defining an infinite number of configurations that yield maximum performance. Using these criteria, MIMO configurations can be designed to offer performance that is highly insensitive to the exact orientation and positioning of the antenna arrays. Moreover, through use of embodiments of the present invention, the maximum theoretic MIMO capacity (higher than i.i.d. Rayleigh capacity) can be achieved when there is no scattering present in the channel (free-space MIMO channel). In the presence of multipath signals, the system continues to provide a very good capacity.

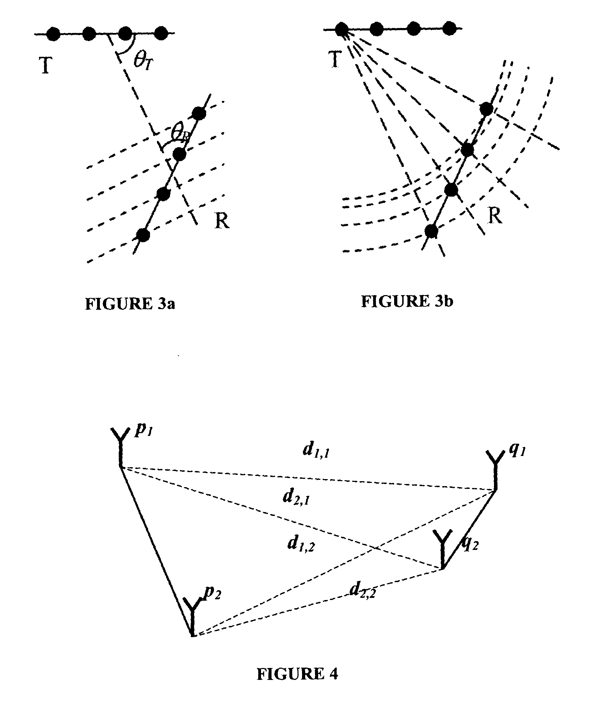

To investigate the capacity of a MIMO system, a channel model needs to be established. Most of the channel models used today fall into two categories: physical and non-physical models. These two categories of models have previously predicted that the MIMO capacity in LOS environments is very low. This prediction is correct for small inter-element spacings at the arrays and large transmitter-to-receiver (T-R) distance. Under these conditions, the transmit array can be considered as a point source. Consequently, the phases of the received signals on all elements are linearly dependent (see FIG. 3a). Hence, the received signals are highly correlated and the capacity performance is similar to that of a Multiple-Input, Single-Output (MISO) system. If, however, the spacing of one of the arrays is increased (or if the T-R distance is decreased), the point-source assumption is no longer valid (see FIG. 3b) and the prior art models fail to predict the capacity of the system correctly. To overcome this limitation of existing models, a Distributed Source Model (DSM) can be employed.

FIG. 4 shows a 2 x 2 MIMO system with elements $p_1$, $p_2$ and $q_1$, $q_2$ at the transmitter and receiver, respectively. The narrowband channel response matrix for this system is:

$$\mathbf{H} = \begin{bmatrix} h_{1,1} & h_{1,2} \\ h_{2,1} & h_{2,2} \end{bmatrix}$$

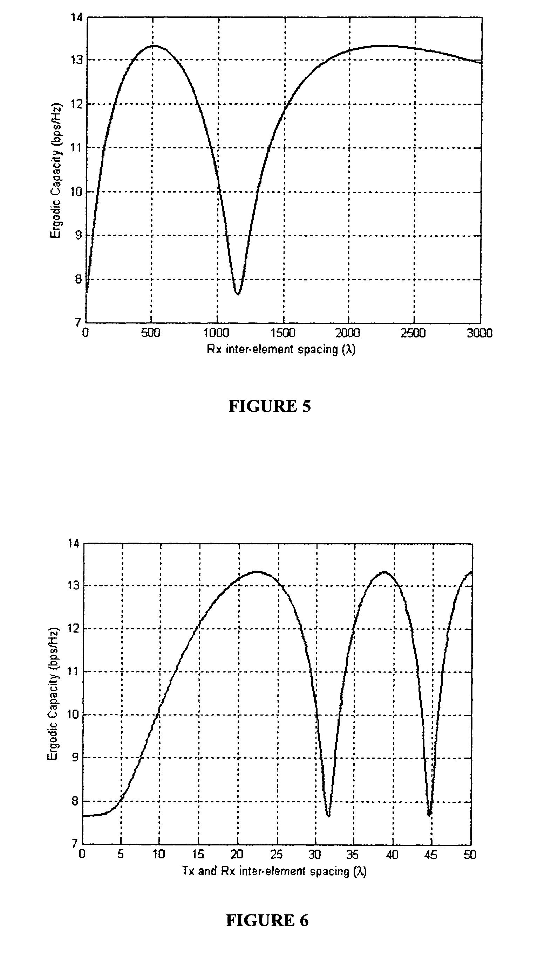

FIG. 5 shows the results of a simulation performed to investigate the capacity as a function of the receiver inter-element spacing for a fixed transmit spacing equal to $\lambda/2$ and a fixed T-R distance of 5 m. FIG. 5 shows that the capacity in LOS systems is enhanced using electrically large antennas. Moreover, the capacity achieved at the maximum point is not just an improvement over conventional systems but represents the optimum MIMO system, in which the signals between all antenna elements are perfectly orthogonal and unfaded. The capacity at the optimal point (13.3 bps/Hz) is higher than the i.i.d. Rayleigh capacity (11.4 bps/Hz) and is almost double the capacity predicted from conventional models (7.6 bps/Hz). However, this comes at a cost of having an inter-element spacing at one end of the order of the T-R distance (500λ= 2.5 m).

For most applications the inter-element spacing on one array required for the system to achieve the maximum capacity is impractical. One possible way to achieve the same capacity with more realistic structures is to use electrically large arrays at both ends of the communications link. FIG. 6 shows the results of a second simulation in which the capacity was calculated as a function of the spacing in both arrays. From FIG. 6, it can be seen that the maximum capacity can be achieved with a spacing of only 22λ (i.e., 11 cm). This shows that at high frequencies (or equivalently at small wavelengths) it is possible to build realistic systems that can achieve the maximum capacity.

The capacities shown in FIG.s 5 and 6 correspond to environments with no scattering present. This does not represent a realistic scenario where various amounts of scattering are present. In order to simulate the capacity for these types of environments, a combination of the DSM and other models may be used. The resulting capacities as a function of the Rician K-factor (i.e., the ratio of the powers of the LOS signal over the multipath signals) appear in FIG. 2. In FIG. 2, the effect of the LOS signal on the capacity is shown for two systems: a system employing antenna arrays with small spacings and random orientations and a system with specifically spaced and orientated antenna elements.

From FIG. 2, it is clear that a system with specifically spaced and orientated antenna elements outperforms a system employing antenna arrays with small spacings and random orientations for high K-factors and both systems asymptotically reach the i.i.d. Rayleigh capacity for very low K-factors.

Whilst the above analysis of the capacity of a 2 x 2 MIMO system as a function of the inter-element spacing at the antennas using the DSM is useful, the channel responses are in fact deterministic and a closed form expression can be derived to relate the capacity of a system with the positioning of the four antenna elements.

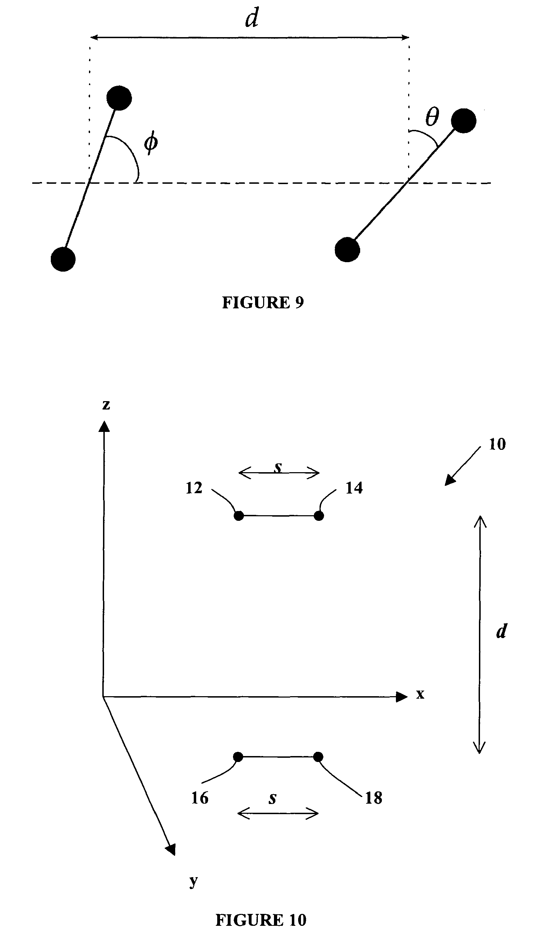

Referring back to the 2 x 2 MIMO system in free-space in FIG. 4, and also referring to FIG. 9, if the distances between all elements are known, the capacity of the system can be calculated from:

$$ C = \log_2\left( \det\left( \mathbf{I}_2 + \frac{\rho}{2}\mathbf{H}\mathbf{H}^H \right) \right) \text{bps/Hz} \qquad \text{Eq. (2)} $$

where $\mathbf{I}_2$ corresponds to the 2 x 2 identity matrix, $\rho$ corresponds to the signal-to-noise ratio (SNR) in the channel and $H$ denotes the Hermitian conjugate.

Note, more generally for an N x N MIMO,

$$ C = \log_2\left( \det\left( \mathbf{I}_N + \frac{\rho}{N}\mathbf{H}\mathbf{H}^H \right) \right) \text{bps/Hz} $$

where $\mathbf{I}_N$ is the N x N identity matrix.

Assuming that only LOS propagation occurs (i.e., there is no multipath), then the normalised responses between each pair of transmit and receive elements are:

$$ h_{1,1} = e^{-j\left(kd_{1,1}+\phi\right)}, \; h_{1,2} = e^{-j\left(kd_{1,2}+\theta\right)}, \; h_{2,1} = e^{-j\left(kd_{2,1}+\phi\right)}, \; h_{2,2} = e^{-j\left(kd_{2,2}+\theta\right)} $$

The capacity is then:

$$ C = \log_2\left( \det\left( \begin{bmatrix} 1 & 0 \\ 0 & 1 \end{bmatrix} + \frac{\rho}{2}\left[ \begin{array}{cc} 2 & \dfrac{e^{jk\left(d_{2,1}-d_{1,1}+\phi-\phi\right)}+e^{jk\left(d_{2,2}-d_{1,2}+\theta-\theta\right)}}{2} \\ e^{jk\left(d_{1,1}-d_{2,1}+\phi-\phi\right)}+e^{jk\left(d_{1,2}-d_{2,2}+\theta-\theta\right)} & \end{array} \right] \right) \right) $$

Note that the relative phases of $\phi$ and $\theta$ do not affect the capacity. Thus,

$$C = \log_2\left(\det\left(\begin{bmatrix} 1 & 0 \\ 0 & 1 \end{bmatrix} + \frac{\rho}{2}\left[\frac{2}{e^{jk(d_{1,1}-d_{2,1})} + e^{jk(d_{1,2}-d_{2,2})}} \quad \frac{e^{jk(d_{2,1}-d_{1,1})} + e^{jk(d_{2,2}-d_{1,2})}}{2}\right]\right)\right) \qquad \text{Eq. (3)}$$

And finally,

$$C = \log_2\left(-\frac{1}{2}\rho^2\cos\left(k\left(d_{1,2} + d_{2,1} - d_{1,1} - d_{2,2}\right)\right) + 1 + 2\rho = \frac{1}{2}\rho^2\right) \qquad \text{Eq. (4)}$$

This closed form expression relates the positioning of the four antenna elements directly with the capacity of the system, hence defining the following criterion for maximum capacity:

$$\left|d_{1,1} - d_{1,2} + d_{2,2} - d_{2,1}\right| = (2r+1)\frac{\lambda}{2} \quad \text{for} \quad r = 0, 1, 2, 3, \dots \qquad \text{Eq. (5)}$$

Where $d_{q,p}$ corresponds to the distance between the receiving element q and the transmitting element $p$, and $r$ represents a positive integer.

The normalised channel matrix for an NxN MIMO system is:

$$\mathbf{H} = \begin{bmatrix} e^{-jkd_{11}} & e^{-jkd_{12}} & \dots & e^{-jkd_{1N}} \\ e^{-jkd_{21}} & & \ddots & \\ \vdots & & & \\ e^{-jkd_{N1}} & & \dots & e^{-jkd_{NN}} \end{bmatrix}$$

then

$$\mathbf{H}^H = \begin{bmatrix} e^{jkd_{11}} & e^{jkd_{21}} & \dots & e^{jkd_{N1}} \\ e^{jkd_{12}} & & \ddots & \\ \vdots & & & \\ e^{jkd_{1N}} & & \dots & e^{jkd_{NN}} \end{bmatrix}$$

and finally

$$\mathbf{HH}^H = \begin{bmatrix} e^{-jkd_{11}}e^{+jkd_{11}} + e^{-jkd_{12}}e^{+jkd_{12}} + \ldots & e^{-jkd_{11}}e^{+jkd_{21}} + e^{-jkd_{12}}e^{+jkd_{22}} + \ldots & \cdots & e^{-jkd_{11}}e^{+jkd_{N1}} + e^{-jkd_{12}}e^{+jkd_{N2}} + \ldots \\ e^{-jkd_{21}}e^{+jkd_{11}} + e^{-jkd_{22}}e^{+jkd_{12}} + \ldots & \ddots & & \\ \vdots & & & \\ e^{-jkd_{N1}}e^{+jkd_{11}} + e^{-jkd_{N2}}e^{+jkd_{12}} + \ldots & \cdots & & e^{-jkd_{N1}}e^{+jkd_{N1}} + e^{-jkd_{N2}}e^{+jkd_{N2}} + \ldots \end{bmatrix}$$

$$= \begin{bmatrix} N & e^{-jk(d_{11}-d_{21})} + e^{-jk(d_{12}-d_{22})} + \ldots & \cdots & e^{-jk(d_{11}-d_{N1})} + e^{-jk(d_{12}-d_{N2})} + \ldots \\ e^{-jk(d_{21}-d_{11})} + e^{-jk(d_{22}-d_{12})} + \ldots & \ddots & & \\ \vdots & & & \\ e^{-jk(d_{N1}-d_{11})} + e^{-jk(d_{N2}-d_{12})} + \ldots & \cdots & & N \end{bmatrix}$$

The elements on the diagonal are all equal to N. The off-diagonal elements show the dependence of the channel coefficients and therefore the maximum capacity occurs when these elements are equal to zero. Each $e^{-jkd}$ exponential is a unit-length vector with phase k*d and therefore in order to achieve maximum capacity these vectors on each off diagonal element need to cancel out.

A preferred range for these elements would be to have vector lengths less than N (e.g. N/2) and a more preferred range would be to have vector lengths much less than N (e.g. N/4 or less).

As an example, for a 2 x 2 system the following needs to be true to achieve maximum capacity:

$$e^{-jk(d_{11}-d_{21})} + e^{-jk(d_{12}-d_{22})} = 0$$

$$k|d_{11} - d_{21} + d_{22} - d_{12}| = (2r+1)\pi$$

$$\frac{2\pi}{\lambda}|d_{11} - d_{21} + d_{22} - d_{12}| = (2r+1)\pi$$

$$|d_{11} - d_{21} + d_{22} - d_{12}| = (2r+1)\frac{\lambda}{2}$$

for $r$ = 0,1,2,...

and for a 3 x 3 system the following needs to be true to achieve maximum capacity:

$$e^{-jk(d_{11}-d_{21})} + e^{-jk(d_{12}-d_{22})} + e^{-jk(d_{13}-d_{23})} = 0$$

and

$$e^{-jk(d_{11}-d_{31})} + e^{-jk(d_{12}-d_{32})} + e^{-jk(d_{13}-d_{33})} = 0$$

and

$$e^{-jk(d_{21}-d_{31})} + e^{-jk(d_{22}-d_{32})} + e^{-jk(d_{23}-d_{33})} = 0$$

in terms of distances these can be written as:

$$\left|d_{11} - d_{21} + d_{12} - d_{22} + d_{13} - d_{23}\right| = (2r+1)\frac{\lambda}{2}$$

$$\left|d_{11} - d_{31} + d_{12} - d_{32} + d_{13} - d_{33}\right| = (2r+1)\frac{\lambda}{2}$$

$$\left|d_{21} - d_{31} + d_{22} - d_{32} + d_{23} - d_{33}\right| = (2r+1)\frac{\lambda}{2}$$

the same principles apply for every N x N array but the number of criteria that need to be satisfied simultaneously is equal to the number of off-diagonal elements of $HH^H$ divided by two (because the lower triangular submatrix of $HH^H$ is the conjugate of the upper triangular sub-matrix). For example, for 4 x 4 we need 6 equations, for 5 x 5 we need 10 equations etc.

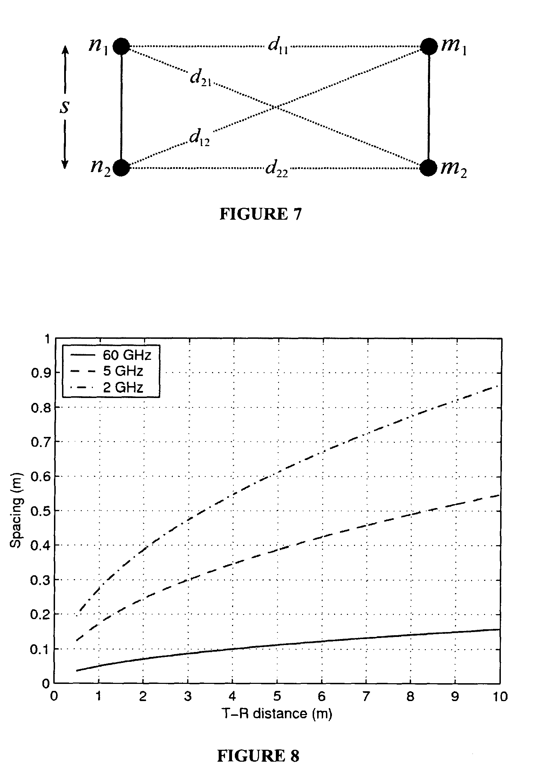

Eq. (5) can be simplified for a 2 x 2 MIMO system if certain assumptions are made. For example, if the two arrays are parallel and they have the same spacing $s$ (see FIG. 7), then $d_{1,1} = d_{2,2}$ and $d_{1,2} = d_{2,1}$ so the first maximum for the capacity can be calculated to appear when:

$$\left|d_{1,1} - d_{2,1}\right| = \frac{\lambda}{4}$$

If we substitute $d_{2,1}^2 = d_{1,1}^2 + s^2$ (from Pythagoras' theorem), we get:

$$s^2 = \frac{\lambda^2}{16} + \frac{\lambda d_{1,1}}{2}$$

However, $\dfrac{\lambda^2}{16}$ is small compared to $\dfrac{\lambda d_{1,1}}{2}$. Thus,

$$s = \sqrt{\frac{\lambda d_{1,1}}{2}}$$

This relation gives us the minimum spacing required to achieve the maximum capacity for a given carrier frequency and T-R distance. FIG. 8 shows the minimum spacing required as a function of the T-R distance for three frequencies of interest.

Note that $s^2$ may be replaced by $s_1 s_2$ for arrays with different spacings at the transmitter and the receiver. Furthermore, for an N x N MIMO system with uniform linear arrays at each end, this equation can be more generally expressed as:

$$s_1 s_2 = \frac{\lambda d}{N}$$

When the arrays are not parallel to each other (as in FIG. 9), a larger spacing is required to utilise the diversity offered from the propagation of the LOS signal. Then, the expression for the spacing required to achieve the maximum capacity is the following:

$$s = \sqrt{\frac{\lambda d}{2 \sin(\phi)\sin(\phi - \theta)}}$$

This equation may be re-written as:

$$s_1 s_2 = \frac{\lambda d}{2 \sin(\phi)\sin(\phi - \theta)}$$

where $s_1$ and $s_2$ are the different spacings between elements at the transmit and receive arrays.

These equations is useful for designing MIMO systems that can offer capacities near the maximum limit over relatively large areas. For example, consider the scenario in which, an Access-Point (AP) is on the ceiling of an indoor office, a number of Mobile Terminals (MT) are at 5 m below the AP and that high capacity is required in an area of radius 5 m around the AP. Assuming that the maximum array size needs to be restricted to 20 cm, the maximum capacity criterion can be written in terms of the angles as:

$$\sin(\phi)\sin(\phi - \theta) < \frac{\lambda d}{2 s^2}$$

For $\lambda$ = 5 mm, $d$ = 5 m and $s$ = 20 cm the angles $\theta$ and $\phi$ - $\theta$ need to be lower than 34° to achieve the maximum capacity. A structure that can satisfy this criterion is an adaptive 3 x 3 MIMO system with triangular arrays at both ends since in that system the angles $\theta$ and $\phi$ - $\theta$ are always lower or equal to 34° between one pair of transmit and one pair of receiver elements.

In reality, some degree of scattering is always present. In order to evaluate the performance in a realistic LOS scenario, the effect of scattering on the capacity needs to be investigated. The channel matrix of a MIMO system in a LOS environment can be modelled as:

$$\mathbf{H} = \sqrt{\frac{K}{K+1}}\mathbf{H}_{LOS} + \sqrt{\frac{K}{K+1}}\mathbf{H}_{NLOS}$$

where $\mathbf{H}_{LOS}$ corresponds to the free-space channel matrix, $\mathbf{H}_{NLOS}$ is the i.i.d. Rayleigh channel matrix and K is the Rician K-factor (i.e., the ratio of the powers of the LOS and the scattered signals).

FIG. 10 shows a 2 x 2 MIMO system **10** according to a first embodiment of the invention. In the first embodiment, the transmit **12,14** and receive **16,18** arrays each has a fixed spacing, s. If the distance between the two arrays is $d$ (see also FIG. 9) and the arrays lie broadside to each other, then a simple relationship between the distance $d$ and the spacing $s$ can be found using Eq. (5):

$$s = \sqrt{\frac{\lambda^2}{16} + \frac{\lambda d}{2}} \qquad\qquad \text{Eq. (6)}$$

which approximates to:

$$s \approx \sqrt{\frac{\lambda d}{2}} \qquad\qquad \text{Eq. (7)}$$

For an operating frequency of 60 GHz and a configuration of the transmit and receive arrays positioned at a distance 2.5 m apart, the spacing required to achieve the maximum capacity is 7.9 cm for a carrier wave frequency of 60 GHz.

Again, more generally, we can express equation (7) as:

$$s_1 s_2 = \frac{\lambda d}{2}$$

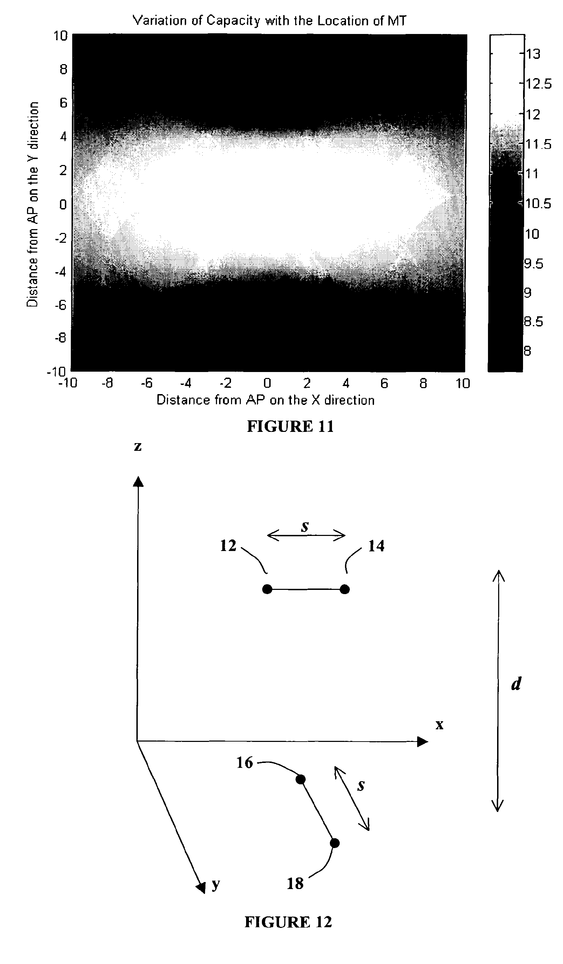

FIG. 11 shows a chart of the variation of the capacity as a function of the position of the receive array on the x-y plane for the first embodiment. Even though very high capacities can be achieved near the optimal point (0,0), there are some locations with low capacities above and below that point. The major drawback of this system however, is that it is sensitive to the orientation of the two arrays. To examine this effect, consider the arrangement of a 2 x 2 MIMO system as shown in FIG. 12, with the same basic configuration as the first embodiment but with the receive array being at an angle of 90 degrees to the transmit array.

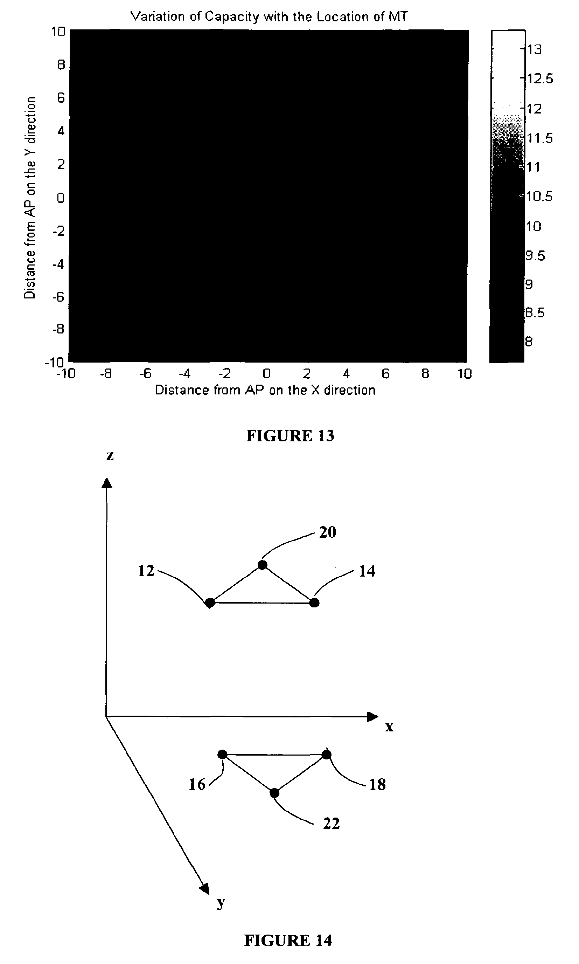

When the position of one of the two arrays changes, the capacity varies according to Eq. (4). The capacity of the system of FIG. 12 as a function of the position of the receive array on the x-y plane is shown in the chart of FIG. 13 (again, $s$ = 7.9 cm, $d$ = 2.5 m and the carrier wave frequency is 60 GHz). The capacity offered by this system is very low compared to that of the embodiment of FIG. 10 and this implies that a different approach needs to be taken for systems with non-fixed arrays suited for point-to-multipoint or for point-to-point applications. A realistic solution would be a system in which the transmit and receive arrays employ more than two elements. Such a system would offer an improvement in the mean capacity over the area of interest and remove the sensitivity of the system on the orientation of antennas.

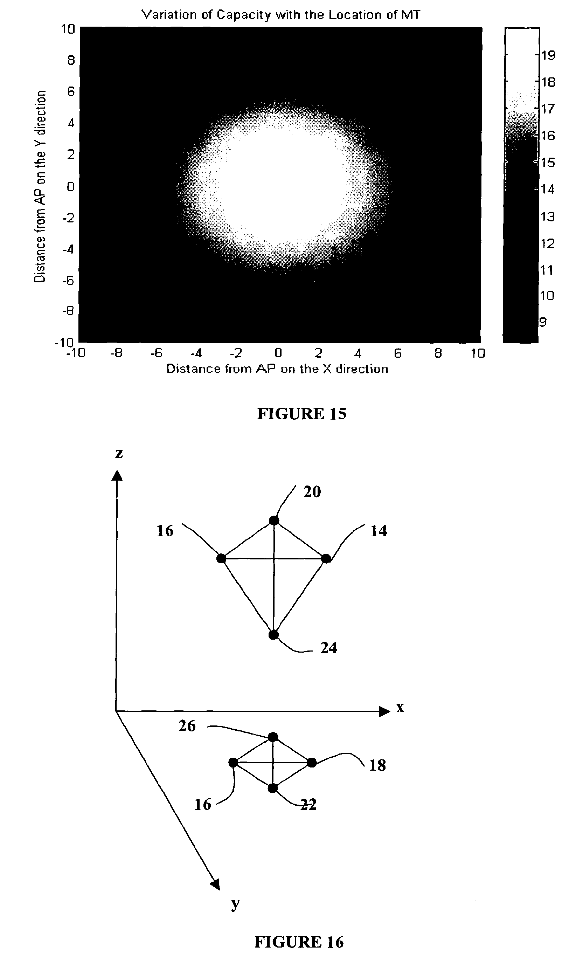

FIG. 14 shows an embodiment of a 3 x 3 MIMO system with the transmit array lying above the receive array (the inter-element spacing is again 7.9 cm, the two arrays are spaced 2.5 m apart and the carrier wave frequency is 60 GHz). The capacity of this embodiment as a function of the position of the receive array on the x-y plane is shown in FIG. 15. The capacity of the embodiment of FIG. 14 is clearly higher than that for the embodiment of FIG. 12. This is due to the larger number of antenna elements at both sides. The most important advantage of this embodiment of a 3 x 3 MIMO system is that it is very insensitive to the orientation of the two arrays. However, this is at the expense of increased complexity. Furthermore, such a system is sensitive to the rotation of the arrays on the y-z plane.

FIG. 16 shows a further embodiment of a MIMO system. In this embodiment, two 4-element arrays are used, each being arranged to form a tetrahedron. The spacing between antenna elements is 10 cm at the transmitter and 5 cm at the receiver. The carrier wave frequency is 60 GHz. This configuration can be either used as a 4 x 4 MIMO system (resulting in high complexity) but can also be used as a 2 x 2 system, in which, the two elements that maximise the capacity are selected from the arrays. Other methods of processing such as combining the signal can be used to maximise the performance of the system. These methods decrease the complexity (compared to a 4 x 4 system) but at the same time offer very high capacities and low sensitivity to the orientation of the two arrays.

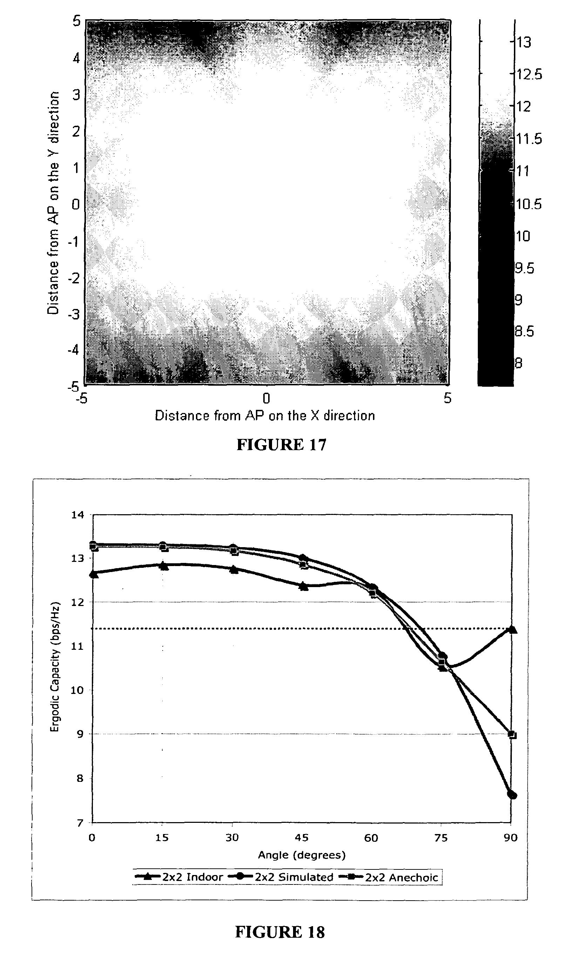

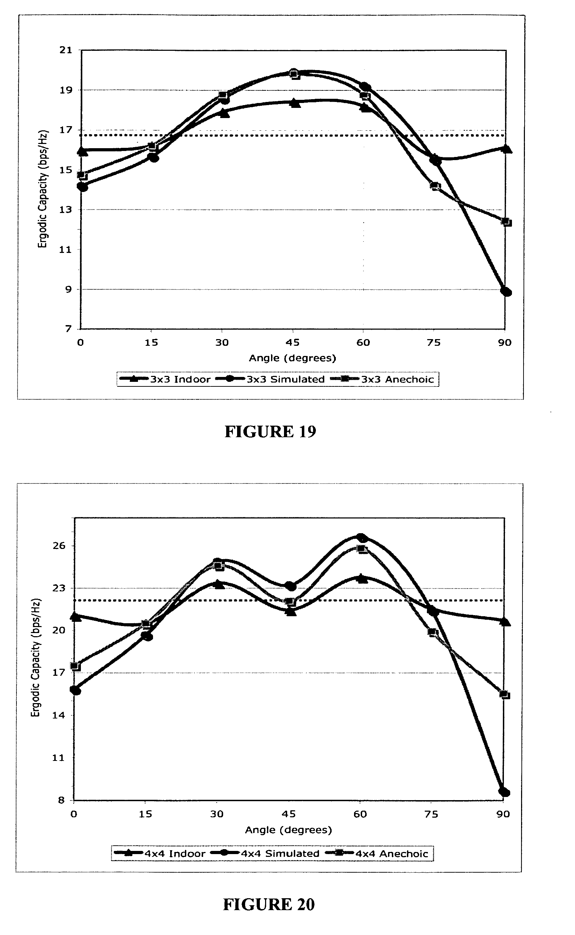

The capacity of a system according to the embodiment of FIG. 16 that employs selectivity of the two elements that maximise the capacity is shown in FIG. 17. The mean capacity achieved over the area is only 9% lower than the maximum capacity. Moreover, the capacities observed on a radius of 5 m around the optimal point (0,0) are higher than the i.i.d. Rayleigh capacity. This implies that this configuration is appropriate for systems with non-fixed transmit and receive arrays since capacities near the maximum limit are achieved and the sensitivity to the orientation of the arrays on either the x-y or y-z directions is very low.

Two sets of measurements were performed to verify the above theoretical predictions: one inside an anechoic chamber and one in an indoor office environment. Since the equations derived above hold for any carrier frequency, it was decided to perform the measurements on the 5.2 GHz band to minimise the complexity of the system.

The measurement platform used was based on a MEDAV RUSK BRI vector channel sounder. This employs a periodic multi-tone signal with a maximum bandwidth of 120 MHz centred at 5.2 GHz. The transmit and receive antennas were uniform linear arrays (ULAs) composed of four dual-polarised patch elements separated by 38 cm. A fast multiplexing system switched between each of these elements in turn in order to take a full "vector snapshot" of the channel in 12.8μs. MIMO channel sounding was achieved through the use of additional switching and synchronisation circuitry to control an identical uniform linear array at the transmitter.

For each transmit element in turn, a vector snapshot of the channel was taken at the receiver. In this way, eight consecutive vector snapshots contain the complex channel responses of all 64 combinations of the dual-polarised four transmit and receive elements. Each complete "MIMO snapshot" of the channel is therefore recorded in 102.4μs, which can be shown to be well within the coherence time of an indoor channel. As far as the positioning of the antennas is concerned, each measurement was performed for a T-R distance of 5 m and for 7 angles between the vertical and horizontal position (i.e., for elevation angles 0˚, 15˚, 30˚, 45˚, 60˚, 75˚ and 90˚).

The purpose of the measurements in the anechoic chamber was to verify the theoretical prediction of the capacity in a free-space channel. Previous studies have overlooked the possibility of MIMO in free-space due to the high amounts of correlation involved at small antenna spacings. Advantages of the present invention may be proven by not only showing that the LOS MIMO channel is not always rank one but to actually get a substantial benefit from the existence of the LOS signal.

As stated above, the arrays used were two identical four-element ULAs with a spacing of 38 cm. This spacing, was found using Eq. (5) to provide the maximum 2 x 2 MIMO capacity at 5.2 GHz and at a T-R distance of 5 m. By rotating the array and by using four elements on each array it is possible to analyse the performance of the system in both optimal and suboptimal positions for different subsets of the 4 x 4 MIMO system. The acquired channel responses were processed and the full channel matrix was decomposed in a 2 x 2, a 3 x 3 and a 4 x 4 matrix. These matrices were then normalised to maintain a unity gain. The resulting capacities appear in FIG.s 18, 19 and 20.

Even though the capacity enhancements of the present invention are evident from the anechoic measurements, the usefulness of embodiments of the invention can only be determined by the performance of the system in a realistic environment. Hence, a second set of measurements was performed with the same antennas in an office environment. For this measurement, the transmit array was placed at a height of 1.6 m from the ground at a horizontal position whereas the receive array was mounted on a tripod which was rotated on the angles mentioned above.

The acquired channel responses were again processed by decomposing the full channel matrix in a 2 x 2, a 3 x 3 and a 4 x 4 matrix and then normalising to maintain a unity gain. The results can again be seen in FIG.s 18, 19 and 20.

The anechoic measurements show that the capacities achieved were very similar to the ones predicted from the closed form expression for the capacity and the DSM. Capacities of the order of 99.7%, 99.5% and 97% of the maximum capacity were achieved in the 2 x 2, 3 x 3 and 4 x 4 cases. On the other hand, the minimum capacities achieved were 17.6%, 39.1% and 79.1 % higher than those predicted from the model for the above cases. This can be accounted to the fact that, assuming random array orientations, the probability of achieving a constructive addition of the LOS rays is much higher than that of achieving perfect cancellation. In a practical system this is an added benefit because it suggests that the probability of achieving rank-one capacity is very low when the arrays are electrically large.

The capacities achieved at most angles for the indoor measurements followed a similar trend to the anechoic measurements due to the strong LOS component present. However, the presence of multipath limited the variance of the capacity around the i.i.d. Rayleigh capacity agreeing with the prediction in FIG. 2. This is due to the stochastic nature of the indoor channel caused by the reflections present in that environment. In detail, capacities of 96.5%, 92.6% and 89.3% of the maximum capacity were achieved for the 2 x 2, 3 x 3 and 4 x 4, cases respectively. However, the minimum capacities achieved were 37.9%, 75.1% and 136.4% higher than those predicted from the model. This was due to a combination of the reasons explained in the previous paragraph with the effect of the multipath on the channel rank.

The results from the two sets of measurements clearly show the inherent capacity advantage of the present invention over conventional MIMO systems. The results of the anechoic measurements prove that very large capacities are achievable when the antenna elements are optimally positioned and there is a low amount of scattering on the environment. On the other hand, the indoor measurement results demonstrated the trade-off between the capacity in optimal and suboptimal locations as a function of the amount of scattering present in the environment. Therefore, both cases showed that MIMO systems according to embodiments of the present invention can offer significant capacity enhancements in most, if not all, environments. The exact performance of the system, however, will also depend greatly on the deployment strategy and the design should take into account various parameters. Namely, the positioning, orientation and mobility of the arrays needs to be considered along with the amount of scattering in the environment. Finally, in order to avoid the low capacities in suboptimal locations, it may prove necessary in some applications to use adaptive MIMO structures, where a subset of the whole number of transmit and receive elements will be used at each time.

The comparison of systems based on their capacity performance only provides an upper bound on the realistic capacity of a system and does not necessarily reflect the achievable performance using practical transmission techniques. To investigate the performance of embodiments of the present invention on a link-level, a modulation and a detection method needs to be employed. The BER performance for Binary Phase Shift Keying (BPSK) modulation and two detection methods (Zero-Forcing (ZF) and the Maximum-Likelihood (ML)) is described below.

Considering first the ZF method, if it is assumed that the system of interest is narrowband, non frequency-selective and that there is no interference from other sources, the input-output relation for that system can be written as in Eq. (1), where, for a 2 x 2 MIMO system, the received signal vector is:

$$y = \begin{bmatrix} y_1 \\ y_2 \end{bmatrix},$$

the transmitted signal vector is:

$$x = \begin{bmatrix} x_1 \\ x_2 \end{bmatrix},$$

the noise vector is:

$$n = \begin{bmatrix} n_1 \\ n_2 \end{bmatrix},$$

and finally, the channel response matrix is:

$$H = \begin{bmatrix} h_{1,1} & h_{1,2} \\ h_{2,1} & h_{2,2} \end{bmatrix}$$

In such a system, one of the simplest methods to detect the transmitted signal (assuming that the channel is fully known at the receiver) is to multiply the received vector with the inverse channel matrix $(\mathbf{H^{-1}})$. The result is the transmitted signal plus noise multiplied by $\mathbf{H^{-1}}$ as follows:

$$s = x + \mathbf{H}^{-1}n$$

which is equivalent to:

$$s = x + \frac{1}{\det(\mathbf{H})} \begin{bmatrix} h_{2,2}n_1 & -h_{1,2}n_2 \\ -h_{2,1}n_1 & h_{1,1}n_2 \end{bmatrix}$$

The above equation can be expanded for the signal received in each receiver branch as:

$$s_1 = x_1 + \frac{h_{2,2}}{\det(\mathbf{H})} n_1 - \frac{h_{1,2}}{\det(\mathbf{H})} n_2$$

$$s_2 = x_2 + \frac{h_{1,1}}{\det(\mathbf{H})} n_2 - \frac{h_{2,1}}{\det(\mathbf{H})} n_1$$

Assuming that the noise is additive white Gaussian noise (AWGN) (i.e. $n_1$, $n_2 \sim N(0,\sigma^2)$) and that $|h_{n,m}| = 1$ (as in a pure LOS system), this MIMO system is equivalent to two parallel SISO systems with noise power equal to:

$$\sigma_{ZF}^2 = \frac{2}{(\det(\mathbf{H}))^2} \sigma^2$$

Therefore, by comparing this noise power with the noise in a SISO system, it is clear that the above system outperforms a SISO system when $\left|\det(\mathbf{H})\right| > \sqrt{2}$. A closed form expression that relates the probability of error of the ZF method with the channel matrix (assuming BPSK modulation) is:

$$P(e) = \frac{1}{2} erfc(\sigma_{ZF})$$

Clearly, since the performance is directly related to the determinant of the channel matrix, the criterion for achieving minimum BER using ZF detection is the same as the maximum capacity criterion. Moreover, the design methods for these systems are the same as those for systems achieving maximum capacity.

The receiving method presented in the previous section is one of the simplest MIMO receivers used today. The reduced complexity however, comes at a cost of noise amplification. An alternative receiver that does not suffer from this problem is the ML receiver, which in fact, is the optimal MIMO receiver. The following derivation serves as a tool in estimating the bit error rate as a function of the position of the elements in suboptimal locations. Assuming equally likely, temporally uncoded transmit symbols, the ML receiver chooses the vector $\mathbf{s}$ that solves:

$$\hat{\mathbf{s}} = \arg\min_s \|\mathbf{y} - \mathbf{Hs}\|_F^2 \qquad\qquad \text{Eq. (8)}$$

where the optimisation is performed through an exhaustive search over all candidate vector symbols $\mathbf{s}$.

For a stochastic channel matrix $\mathbf{H}$ there is no analytical expression for the BER in an ML receiver. However, according to embodiments of the invention, the channel matrix is deterministic, and if we assume the simplest case of a 2 x 2 MIMO structure employing BPSK modulation, then an analytical expression can be found for the BER as a function of the elements of the channel matrix.

Assuming perfect channel knowledge Eq. (8) can be expanded to:

$$\|\mathbf{y} - \mathbf{Hs}\|_F^2 = \|\mathbf{Hx} + \mathbf{n} - \mathbf{Hx}\|_F^2$$

$$= \left|h_{1,1}(x_1 - s_1) + h_{1,2}x_2 - s_2 + n_1\right|^2 + \left|h_{2,1}(x_1 - s_1) + h_{2,2}x_2 - s_2 + n_2\right|^2$$

which gives four possible outcomes:

- For $s_1 = x_1$ and $s_2 = x_2$

$$m_1 = \left|n_1\right|^2 + \left|n_2\right|^2$$

- For $s_1 = -x_1$ and $s_2 = x_2$

$$m_2 = \left|2h_{1,1}s_1 + n_1\right|^2 + \left|2h_{2,1}s_1 + n_2\right|^2$$

- For $s_1 = x_1$ and $s_2 = -x_2$

$$m_3 = \left|2h_{1,2}s_2 + n_1\right|^2 + \left|2h_{2,2}s_2 + n_2\right|^2$$

- For $s_1 = -x_1$ and $s_2 = -x_2$

$$m_4 = \left|2h_{1,1}s_1 + 2h_{1,2}s_2 + n_1\right|^2 + \left|2h_{2,1}s_1 + 2h_{2,2}s_2 + n_2\right|^2$$

At the detection stage, the pair of bits that gives the lowest metric is accepted as the transmitted pair. Therefore, in order for an error to occur, at least one of the $m_2$, $m_3$, $m_4$ metrics needs to be lower than $m_1$ and then the probability of error can be expressed as:

$$P(e) = P(m_2 = \min(\mathbf{m})) + P(m_3 = \min(\mathbf{m})) + P(m_4 = \min(\mathbf{m}))$$

Where,

$$P(m_2 = \min(\mathbf{m})) = P((m_2 < m_1) \cap (m_2 < m_3) \cap (m_2 < m_4))$$

$$P(m_3 = \min(\mathbf{m})) = P((m_3 < m_1) \cap (m_3 < m_2) \cap (m_3 < m_4))$$

$$P(m_4 = \min(\mathbf{m})) = P((m_4 < m_1) \cap (m_4 < m_2) \cap (m_4 < m_3))$$

To calculate these probabilities, the joint distributions of the random variables (r.v.) $m_1$, $m_2$, $m_3$, $m_4$ need to be investigated. For simplicity, the four metrics can be expanded and separated into real and imaginary parts as follows (note throughout the derivation that the notation $a = \bar{a} + \tilde{a}j$, where $j = \sqrt{-1}$, is used for the complex numbers $n_k$, $h_{p,q}$, $s_t$):

$$m_1 = \bar{n}_1^2 + \tilde{n}_1^2 + \bar{n}_2^2 + \tilde{n}_2^2$$

$$
\begin{aligned}
m_2 &= \left(2\bar{h}_{1,1}s_1 + \bar{n}_1\right)^2 + \left(2\tilde{h}_{1,1}s_1 + \tilde{n}_1\right)^2 + \left(2\bar{h}_{2,1}s_1 + \bar{n}_2\right)^2 + \left(2\tilde{h}_{2,1}s_1 + \tilde{n}_2\right)^2 \\
&= \bar{n}_1^2 + \tilde{n}_1^2 + \bar{n}_2^2 + \tilde{n}_2^2 + 4s_1\left(\bar{n}_1\bar{h}_{1,1} + \tilde{n}_1\tilde{h}_{1,1} + \bar{n}_2\bar{h}_{2,1} + \tilde{n}_2\tilde{h}_{2,1}\right) + 4s_1^2\left(\bar{h}_{1,1}^2 + \tilde{h}_{1,1}^2 + \bar{h}_{2,1}^2 + \tilde{h}_{2,1}^2\right) \\
&= m_1 + 4s_1\left(\bar{n}_1 h_{1,1} + \tilde{n}_1\tilde{h}_{1,1} + \bar{n}_2 h_{2,1} + \tilde{n}_2\tilde{h}_{2,1}\right) + 8s_1^2
\end{aligned}
$$

$$
\begin{aligned}
m_3 &= \left(2\bar{h}_{1,2}s_2 + \bar{n}_1\right)^2 + \left(2\tilde{h}_{1,2}s_2 + \tilde{n}_1\right)^2 + \left(2\bar{h}_{2,2}s_2 + \bar{n}_2\right)^2 + \left(2\tilde{h}_{2,2}s_2 + \tilde{n}_2\right)^2 \\
&= \bar{n}_1^2 + \tilde{n}_1^2 + \bar{n}_2^2 + \tilde{n}_2^2 + 4s_2\left(\bar{n}_1 h_{1,2} + \tilde{n}_1\tilde{h}_{1,2} + \bar{n}_2 h_{2,2} + \tilde{n}_2\tilde{h}_{2,2}\right) + 4s_2^2\left(\bar{h}_{1,2}^2 + \tilde{h}_{1,2}^2 + h_{2,2}^2 + \tilde{h}_{2,2}^2\right) \\
&= m_1 + 4s_2\left(n_1 h_{1,2} + \tilde{n}_1\tilde{h}_{1,2} + n_2 h_{2,2} + \tilde{n}_2\tilde{h}_{2,2}\right) + 8s_2^2
\end{aligned}
$$

$$
\begin{aligned}
m_4 &= \left(2h_{1,1}s_1 + 2h_{1,2}s_2 + \bar{n}_1\right)^2 + \left(2\tilde{h}_{1,1}s_1 + 2\tilde{h}_{1,2}s_2 + \tilde{n}_1\right)^2 + \left(2h_{2,1}s_1 + 2h_{2,2}s_2 + \bar{n}_2\right)^2 \\
&\quad + \left(2\tilde{h}_{2,1}s_1 + 2\tilde{h}_{2,2}s_2 + \tilde{n}_2\right)^2 \\
&= m_2 + m_3 - m_1 + 8s_1 s_2\left(\bar{h}_{1,1}\bar{h}_{1,2} + \tilde{h}_{1,1}\tilde{h}_{1,2} + \bar{h}_{2,1}\bar{h}_{2,2} + \tilde{h}_{2,1}\tilde{h}_{2,2}\right)
\end{aligned}
$$

The above r.v. follow $\chi^2$ distributions and therefore the difficulty involved in studying their joint distributions is very high. To avoid this problem and to simplify our derivation we can define the equivalent r.v. $\phi_{a,b} \equiv m_a - m_b$ and then calculate the equivalent probabilities:

$$P(m_2 = \min(\mathbf{m})) = P((\phi_{2,1} < 0) \cap (\phi_{2,3} < 0) \cap (\phi_{2,4} < 0))$$

$$P(m_3 = \min(\mathbf{m})) = P((\phi_{3,1} < 0) \cap (\phi_{3,2} < 0) \cap (\phi_{3,4} < 0))$$

$$P(m_4 = \min(\mathbf{m})) = P((\phi_{4,1} < 0) \cap (\phi_{4,2} < 0) \cap (\phi_{4,3} < 0))$$

The equivalent r.v. for this probability $P(m_2 = \min(\mathbf{m}))$ can be found to be:

$$\phi_{2,1} = 4s_1\left(\bar{n}_1\bar{h}_{1,1} + \tilde{n}_1\tilde{h}_{1,1} + \bar{n}_2\bar{h}_{2,1} + \tilde{n}_2\tilde{h}_{2,1}\right) + 8s_1^2$$

$$\phi_{2,3} = 4s_1 \left( n_1\bar{h}_{1,1} + \tilde{n}_1\tilde{h}_{1,1} + n_2\bar{h}_{2,1} + \tilde{n}_2\tilde{h}_{2,1} \right) - 4s_2 \left( n_1\bar{h}_{1,2} + \tilde{n}_1\tilde{h}_{1,2} + n_2\bar{h}_{2,2} + \tilde{n}_2\tilde{h}_{2,2} \right)$$

$$= \left( 4s_1\bar{h}_{1,1} - 4s_2\bar{h}_{1,2} \right)n_1 + \left( 4s_1\tilde{h}_{1,1} - 4s_2\tilde{h}_{1,2} \right)\tilde{n}_1 + \left( 4s_1\bar{h}_{2,1} - 4s_2\bar{h}_{2,2} \right)n_2 + \left( 4s_1\tilde{h}_{2,1} - 4s_2\tilde{h}_{2,2} \right)\tilde{n}_2$$

$$\phi_{2,4} = -4s_2 \left( n_1\bar{h}_{1,2} + \tilde{n}_1\tilde{h}_{1,2} + n_2\bar{h}_{2,2} + \tilde{n}_2\tilde{h}_{2,2} \right) - 8s_1s_2 \left( \bar{h}_{1,1}\bar{h}_{1,2} + \tilde{h}_{1,1}\tilde{h}_{1,2} + \bar{h}_{2,1}\bar{h}_{2,2} + \tilde{h}_{2,1}\tilde{h}_{2,2} \right) - 8s_2^2$$

All of the above are normally distributed (since they are linear functions of normal r.v.). Then, if we define:

$$Q = h_{1,1}h_{1,2} + \widetilde{h}_{1,1}\widetilde{h}_{1,2} + h_{2,1}h_{2,2} + \widetilde{h}_{2,1}\widetilde{h}_{2,2}$$

the means and variances of the above r.v. are:

$$\mu_{2,1} = 8s_1^2$$

$$\sigma_{2,1}^2 = 32s_1^2$$

$$\mu_{2,3} = 0$$

$$\sigma_{2,3}^2 = 32s_1^2 + 32s_2^2 - 32s_1 s_2 Q$$

$$\mu_{2,4} = -8s_1 s_2 Q - 8s_2^2$$

$$\sigma_{2,4}^2 = 32s_2^2$$

Clearly, $\phi_{2,1}$ does not depend on **H** it is also independent of $\phi_{2,3}$ and $\phi_{2,4}$. Therefore, $P(m_2 = \min(\mathbf{m}))$ can be written as:

$$P(m_2 = \min(\mathbf{m})) = P((\phi_{2,3} < 0) \cap (\phi_{2,4} < 0))P(\phi_{2,1} < 0))$$

where,

$$P(\phi_{2,1} < 0) = \frac{1}{2}\left(1 - erf\left(\frac{\sqrt{2}\mu_{2,1}}{2\sigma_{2,1}}\right)\right)$$

and $P((\sigma_{2,3} < 0) \cap (\phi_{2,4} < 0))$ is the probability of a bivariate normal distribution and can be found from:

$$P((\phi_{2,3} < 0) \cap (\phi_{2,4} < 0)) = \int_{-\infty}^{0} \int_{-\infty}^{0} \frac{1}{f} \exp\left[-\frac{z}{2(1-\rho_{\phi_{2,3}\phi_{2,4}}^2)}\right] d\phi_{2,3} d\phi_{2,4}$$

Where,

$$f = 2\pi\sigma_{\dot{\phi}_{2,3}}\sigma_{\dot{\phi}_{2,4}}\sqrt{1-\rho_{\dot{\phi}_{2,3},\dot{\phi}_{2,4}}^2}$$

$$z = \frac{(x - \mu_{\dot{\phi}_{2,3}})^2}{\sigma_{\dot{\phi}_{2,3}}^2} - \frac{2\rho_{\phi_{2,3},\dot{\phi}_{2,4}}(x - \mu_{\dot{\phi}_{2,3}})(y - \mu_{\dot{\phi}_{2,4}})}{(\sigma_{\dot{\phi}_{2,3}}\sigma_{\dot{\phi}_{2,4}})} + \frac{(y - \mu_{\dot{\phi}_{2,4}})^2}{\sigma_{\dot{\phi}_{2,4}}^2}$$

Then, $\rho$ is the correlation coefficient and cov $(\phi_{2,3}, \phi_{2,4})$ is the covariance of the two normal distributions and can be found to be equal to

$$\rho_{\dot{\phi}_{2,3},\dot{\phi}_{2,4}} = \frac{\text{cov}\left(\dot{\phi}_{2,3}, \dot{\phi}_{2,4}\right)}{\sigma_{\dot{\phi}_{2,3}}\sigma_{\dot{\phi}_{2,4}}}$$

$$\text{cov}\left(\dot{\phi}_{2,3}, \dot{\phi}_{2,4}\right) = \left(32s_1^2 - 16s_1 s_2 Q\right)\sigma^2$$

The equivalent r.v. for this probability $P(m_3 = \min(\mathbf{m}))$ can be found to be:

$$\dot{\phi}_{3,1} = 4s_2\left(\bar{n}_1 h_{1,2} + \tilde{n}_1 \tilde{h}_{1,2} + \bar{n}_2 h_{2,2} + \tilde{n}_2 \tilde{h}_{2,2}\right) + 8s_2^2$$

$$\dot{\phi}_{3,2} = -\dot{\phi}_{2,3}$$

$$\dot{\phi}_{3,4} = -4s_1 \left( \bar{n}_1 h_{1,1} + \tilde{n}_1 \tilde{h}_{1,1} + \bar{n}_2 h_{2,1} + \tilde{n}_2 \tilde{h}_{2,1} \right) - 8s_1 s_2 Q - 8s_1^2$$

Again, these follow normal distributions and have the following means and variances:

$$\mu_{3,1} = 8s_2^2$$

$$\sigma_{3,1}^2 = 32s_2^2$$

$$\mu_{3,2} = -\mu_{2,3}$$

$$\sigma_{3,2}^2 = \sigma_{2,3}^2$$

$$\mu_{3,4} = -8s_1 s_2 Q - 8s_1^2$$

$$\sigma_{3,4}^2 = 32s_1^2$$

Since, however, the above are identical as those of $\phi_{2,1}, \phi_{2,3}$ and $\phi_{2,4}$,

$$P\left( m_3 = \min(\mathbf{m}) \right) = P\left( m_2 = \min(\mathbf{m}) \right)$$

The equivalent r.v. for this probability $P(m_4 = \min(\mathbf{m}))$ can be found to be:

$$\dot{\phi}_{4,1} = 4s_1 \left( \bar{n}_1 \bar{h}_{1,1} + \tilde{n}_1 \tilde{h}_{1,1} + \bar{n}_2 \bar{h}_{2,1} + \tilde{n}_2 \tilde{h}_{2,1} \right) + 4s_2 \left( \bar{n}_1 \bar{h}_{1,2} + \tilde{n}_1 \tilde{h}_{1,2} + \bar{n}_2 \bar{h}_{2,2} + \tilde{n}_2 \tilde{h}_{2,2} \right) + 8s_1 s_2 Q$$
$$+ 8s_1^2 + 8s_2^2$$

$$\dot{\phi}_{4,2} = -\dot{\phi}_{2,4}$$

$$\dot{\phi}_{4,3} = -\dot{\phi}_{3,4}$$

which follow normal distribution and have the following means and variances:

$$\mu_{4,1} = 8s_1 s_2 Q + 8s_1^2 + 8s_2^2$$

$$\sigma_{4,1}^2 = 32s_1^2 + 32s_2^2 + 32s_1s_2Q$$

$$\mu_{4,2} = -\mu_{2,4}$$

$$\sigma_{4,2}^2 = \sigma_{2,4}^2$$

$$\mu_{4,3} = -\mu_{3,4}$$

$$\sigma_{4,3}^2 = \sigma_{3,4}^2$$

$\phi_{4,3}$ has the same distribution as $\phi_{4,2}$ so $P(m_4 = \min(\mathbf{m}))$ can be written as:

$$P\left(m_4 = \min(\mathbf{m})\right) = P\left((\phi_{4,1} < 0) \cap (\phi_{4,2} < 0)\right)$$

The probability of the bivariate distribution can be found from:

$$P\left((\phi_{4,1} < 0) \cap (\phi_{4,2} < 0)\right) = \int_{-\infty}^{0} \int_{-\infty}^{0} \frac{1}{f} \exp\left[-\frac{z}{2\left(1 - \rho_{\phi_{4,1},\phi_{4,2}}^2\right)}\right] d\phi_{4,1} d\phi_{4,2}$$

Where,

$$f = 2\pi \sigma_{\phi_{4,1}} \sigma_{\phi_{4,2}} \sqrt{1 - \rho_{\phi_{4,1},\phi_{4,2}}^2}$$

$$z = \frac{(x - \mu_{\phi_{4,1}})^2}{\sigma_{\phi_{4,1}}^2} - \frac{2\rho_{\phi_{4,1},\phi_{4,2}}(x - \mu_{\phi_{4,1}})(y - \mu_{\phi_{4,1}})}{(\sigma_{\phi_{4,1}} \sigma_{\phi_{4,2}})} + \frac{(y - \mu_{\phi_{4,2}})^2}{\sigma_{\phi_{4,2}}^2}$$

Again, $\rho$ is the correlation coefficient and $\mathrm{cov}(\phi_{4,1}, \phi_{4,2})$ is the covariance of the two normal distributions and can be found to be equal to:

$$\mathrm{cov}\left(m_{\phi_{4,1},\phi_{4,2}}\right) = \left(32s^2 + 16s^2 Q\right)\sigma^2$$

$$\rho_{\dot{\phi}_{4,1},\dot{\phi}_{4,2}} = \frac{\text{cov}\left(m_{\dot{\phi}_{4,1};\phi_{4,2}}\right)}{\sigma_{\dot{\phi}_{1,1}}\sigma_{\dot{\phi}_{1,2}}}$$

As stated previously, the values of $x_1$ and $x_2$ that minimise the ML metric are accepted as the detected signal. It is obvious that in this system, maximum BER occurs when $h_{1,1} = \pm h_{1,2}$ and $h_{2,1} = \pm h_{2,2}$ because then $m_4 = m_1$. To achieve the minimum BER, the following criteria need to be satisfied:

$$h_{1,1} \perp h_{1,2}$$

and

$$h_{2,1} \perp h_{2,2}$$

Which (for a pure LOS system) are equivalent to:

$$|d_{1,1} - d_{1,2}| = (2p+1)\frac{\lambda}{4} \text{ and } |d_{2,1} - d_{2,2}| = (2q+1)\frac{\lambda}{4} \text{ for } p, q = 0, 1, 2, ...$$

These criteria are obviously more flexible than the maximum capacity criterion and therefore show that the minimum BER can be achieved in larger areas than those of maximum capacity. Moreover, it is shown that the information theoretic performance and the link-level performance can be different. Another important observation from this criterion is that, contrary to the capacity case, a phase difference between the transmit phases can change the BER. This implies that in such a system it is essential for the transmit phases in all elements to be carefully calibrated. However, it might be possible to use this feature to the system's advantage, i.e., by choosing a particular transmit phase to achieve low BER in a given point in space.

The capacity of MIMO systems in LOS has been investigated. Under these conditions, the channel is usually rank deficient due to the linear dependence of the LOS rays' phases on the receive elements. To overcome this problem, specifically designed antenna arrays can be employed, where the antenna elements are positioned in a way that maximises the channel rank. Embodiments of the present invention help in the design of such a system to achieve the maximum MIMO capacity in free-space as a function of the distance, the orientation and the spacing of the arrays.

The skilled man will be aware of various modifications and equivalents that may be made. The foregoing description is considered as illustrative and not limiting to the scope of the invention which is to be defined in accordance with the following claims. In particular, embodiments of the invention are not limited to the spacings and wavelengths described, nor to the particular SNR of 20 dB used in generating results.

**Claims**

1. A wireless communication system comprising:

    a transmitter comprising:

        first means for transmitting a first data stream multiplexed with a carrier wave having a wavelength $\lambda$; and
        second means for transmitting a second data stream multiplexed with the carrier wave; and

    a receiver comprising:

        third means for receiving the first and second data streams and for providing a first output signal; and
        fourth means for receiving the first and second data streams and for providing a second output signal, wherein:

the first, second, third and fourth means are arranged to substantially satisfy the equation:

$$\left| d_{1,1} - d_{1,2} + d_{2,2} - d_{2,1} \right| = (2r+1)\,\frac{\lambda}{2}\ \text{for}\ r = 0,1,2,3,\ldots$$

where $d_{1,1}$ is the spacing between the first and third means,
$d_{1,2}$ is the spacing between the second and third means,
$d_{2,2}$ is the spacing between the second and fourth means, and
$d_{2,1}$ is the spacing between the first and fourth means.

2. The system of claim 1, comprising N means for transmitting and N means for receiving, N being greater than or equal to 2, wherein:

the first and second means are spaced apart by a distance $s_1$;
the third and fourth means are spaced apart by a distance $s_2$;
the first and second means are arranged parallel to the third and fourth means and spaced apart by a distance $d$; and
$s_1$, $s_2$ and $d$ are adapted to substantially satisfy the equation:

$$s_1 s_2 = \frac{\lambda\,d}{N}\,.$$

3. The system of claim 2, wherein:

$s_1 = s_2 = s$;
N = 2; and
$s$ and $d$ are adapted to substantially satisfy the equation:

$$s \approx \sqrt{\frac{\lambda d}{2}}\,.$$

4. The system of claim 3, wherein s = 7.9 cm, d = 2.5 m and the frequency of the first and second data streams is 60 GHz.

5. A wireless communication system, comprising:

a transmitter comprising:

first means for transmitting a first data stream multiplexed with a carrier wave having a wavelength $\lambda$;
second means for transmitting a second data stream multiplexed with the carrier wave; and
third means for transmitting a third data stream multiplexed with the carrier wave; and

a receiver comprising:

fourth means for receiving the first, second and third data streams and for providing a first output signal;
fifth means for receiving the first, second and third data streams and for providing a second output signal; and
sixth means for receiving the first, second and third data streams and for providing a third output signal, wherein:

the first, second, third, fourth, fifth and sixth means are arranged to substantially satisfy the equations:

$$\left| d_{1,1} - d_{2,1} + d_{1,2} - d_{2,2} + d_{1,3} - d_{2,3} \right| = (2r + 1)\,\frac{\lambda}{2}\ \text{ for } r = 0,1,2,3,\ldots;$$

$$\left| d_{1,1} - d_{3,1} + d_{1,2} - d_{3,2} + d_{1,3} - d_{3,3} \right| = (2r + 1)\,\frac{\lambda}{2}\ \text{ for } r = 0,1,2,3,\ldots;$$

and

$$\left| d_{2,1} - d_{3,1} + d_{2,2} - d_{3,2} + d_{2,3} - d_{3,3} \right| = (2r + 1)\,\frac{\lambda}{2}\ \text{ for } r = 0,1,2,3,\ldots;$$

where $d_{1,1}$ is the spacing between the first and fourth means,
$d_{1,2}$ is the spacing between the second and fourth means,
$d_{2,2}$ is the spacing between the second and fifth means, and
$d_{2,1}$ is the spacing between the first and fifth means.
$d_{1,3}$ is the spacing between the third and fourth means,
$d_{2,3}$ is the spacing between the third and fifth means,
$d_{3,3}$ is the spacing between the third and sixth means,
$d_{3,1}$ is the spacing between the first and sixth means, and
$d_{3,2}$ is the spacing between the second and sixth means.

6. The system of claim 5, wherein:

   the first, second and third means of the transmitter are arranged in a triangular configuration in a first plane; and
   the third, fourth and sixth means of the receiver are arranged in a triangular configuration in a second plane;

   wherein the first and second planes are parallel.

7. The system of claim 6, wherein:

   the spacing between the first and second means, the second and third means, the first and third means, the fourth and fifth means, the fifth and sixth means and the fourth and sixth means is 7.9 cm;
   the distance between the first and second planes is 2.5 m; and
   the frequency of the first and second data streams is 60 GHz.

8. The system of claim 5, wherein:

   the transmitter further comprises seventh means for transmitting a fourth data stream multiplexed with the carrier wave;
   the fourth, fifth and sixth means are further arranged to receive the fourth data stream; and
   the receiver further comprises eighth means for receiving the first, second, third and fourth data streams and for providing a fourth output signal.

9. The system of claim 8, wherein:

   the first, second, third and seventh means are arranged to form a first tetrahedron; and
   the fourth, fifth, sixth and eighth means are arranged to form a second tetrahedron.

10. The system of claim 9, wherein:

the spacing between the first and second means, the first and third means, the second and third means, the seventh and first means, the seventh and third means and the seventh and second means is 10 cm;
the spacing between the fourth and fifth means, the fourth and sixth means, the fifth and sixth means, the fourth and eighth means, the fifth and eighth means and the sixth and eighth means is 5 cm;
the tetrahedra are arranged with opposing vertices with their bases having a separation of 2.5 m; and
the frequency of the first and second data streams is 60 GHz.

11. The system of any one of claims 5 to 10, wherein the receiver further comprises:

   means for selectively combining two or more of the output signals.

12. A method of arranging a communication system, the communication system comprising a transmitter having first means for transmitting a first data stream multiplexed with a carrier wave having a wavelength λ and second means for transmitting a second data stream multiplexed with the carrier wave, and a receiver having third means for receiving the first and second data streams and for providing a first output signal and fourth means for receiving the first and second data streams and for providing a second output signal, the method comprising:

   arranging the first, second, third and fourth means to satisfy the equation:

$$\left| d_{1,1} - d_{1,2} + d_{2,2} - d_{2,1} \right| = (2r + 1)\,\frac{\lambda}{2} \ \text{ for } r = 0,1,2,3,\ldots$$

   where $d_{1,1}$ is the spacing between the first and third means,
   $d_{1,2}$ is the spacing between the second and third means,
   $d_{2,2}$ is the spacing between the second and fourth means, and
   $d_{2,1}$ is the spacing between the first and fourth means.

13. A receiver for a multiple input-multiple output communication system comprising:

   first means for receiving first and second data streams multiplexed with a carrier wave having a wavelength λ; and
   second means for receiving the first and second data streams multiplexed with the carrier wave;

   wherein the first and second means are arranged to satisfy the equation:

$$\left| d_{1,1} - d_{1,2} + d_{2,2} - d_{2,1} \right| = (2r + 1)\,\frac{\lambda}{2} \ \text{ for } r = 0,1,2,3,\ldots$$

   where $d_{1,1}$ is the spacing between the source of the first data stream and the first means,
   $d_{1,2}$ is the spacing between the source of the second data stream and the first means,
   $d_{2,2}$ is the spacing between the source of the second data stream and the second means, and
   $d_{2,1}$ is the spacing between the source of the second data stream and the second means.

14. A transmitter for a multiple input-multiple output communication system comprising:

   first means for transmitting a first data stream multiplexed with a carrier wave having a wavelength λ to first and second means for receiving; and
   second means for transmitting a second data stream multiplexed with the carrier wave to the first and second means for receiving;

   wherein the first and second means for transmitting are arranged to satisfy the equation:

$$|d_{1,1} - d_{1,2} + d_{2,2} - d_{2,1}| = (2r+1)\ \frac{\lambda}{2}\ \text{ for } r = 0,1,2,3,\ldots$$

where $d_{1,1}$ is the spacing between the first means for transmitting and the first means for receiving, $d_{1,2}$ is the spacing between second means for transmitting and the first means for receiving, $d_{2,2}$ is the spacing between the second means for transmitting and second means for receiving, and $d_{2,1}$ is the spacing between the second means for transmitting and the second means for receiving.

15. A receiver comprising:

a plurality of receiver elements, each antenna element being operable to receive a plurality of data streams and to provide an output signal;
means for selecting a subset of the elements based on the output signals; and
control means for altering the selected subset so that the following equation is substantially satisfied:

$$|d_{1,1} - d_{1,2} + d_{2,2} - d_{2,1}| = (2r+1)\ \frac{\lambda}{2}\ \text{ for } r = 0,1,2,3,\ldots$$

where $d_{1,1}$ is the spacing between a first element of the subset and a first means for transmitting a first one of the plurality of data streams,
$d_{1,2}$ is the spacing between a second element of the subset and the first means for transmitting,
$d_{2,2}$ is the spacing between the second element and a second means for transmitting a second one of the plurality of data streams, and
$d_{2,1}$ is the spacing between the first element and the second means for transmitting.

16. A MIMO system comprising the receiver of claim 13 or 15 and / or the transmitter of claim 14.

**x**    **H**    **y**

**FIGURE 1**

**FIGURE 2**

**FIGURE 3a**

**FIGURE 3b**

**FIGURE 4**

**FIGURE 5**

**FIGURE 6**

**FIGURE 7**

**FIGURE 8**

**FIGURE 9**

**FIGURE 10**

Variation of Capacity with the Location of MT

**FIGURE 11**

**FIGURE 12**

Variation of Capacity with the Location of MT

FIGURE 13

FIGURE 14

Variation of Capacity with the Location of MT

**FIGURE 15**

**FIGURE 16**

**FIGURE 17**

**FIGURE 18**

**FIGURE 19**

**FIGURE 20**

**European Patent Office**

**EUROPEAN SEARCH REPORT**

Application Number

EP 05 25 3080

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | CALABRO S ET AL: "Multiple Co-Polar Co-Channel Point-to-Point Radio Transmission" AEU INTERNATIONAL JOURNAL OF ELECTRONICS AND COMMUNICATIONS, ELSEVIER, JENA, DE, vol. 58, no. 1, 2004, pages 51-57, XP004959753 ISSN: 1434-8411 * the whole document * | 1-16 | H04B7/06 |
| A | JENG-SHIANN JIANG ET AL: "Distributed source model for short-range MIMO" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, 6 October 2003 (2003-10-06), pages 357-362Vol1, XP010700876 ISBN: 0-7803-7954-3 * the whole document * | 1-16 | |
| A | KYRITSI P: "MIMO capacity in free space and above perfectground: theory and experimental results" PERSONAL, INDOOR AND MOBILE RADIO COMMUNICATIONS, 2002. THE 13TH IEEE INTERNATIONAL SYMPOSIUM ON SEPT. 15-18, 2002, PISCATAWAY, NJ, USA,IEEE, vol. 1, 15 September 2002 (2002-09-15), pages 182-186, XP010614211 ISBN: 0-7803-7589-0 * the whole document * -/-- | 1-16 | **TECHNICAL FIELDS SEARCHED** (Int.Cl.7)<br><br>H04B |

The present search report has been drawn up for all claims

| Place of search | Date of completion of the search | Examiner |
|---|---|---|
| Munich | 10 October 2005 | Fernández Cuenca, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

**EUROPEAN SEARCH REPORT**

Application Number

EP 05 25 3080

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | HUTTER A A ET AL: "Analysis of MIMO capacity gains for indoor propagation channels with LOS component" PERSONAL, INDOOR AND MOBILE RADIO COMMUNICATIONS, 2002. THE 13TH IEEE INTERNATIONAL SYMPOSIUM ON SEPT. 15-18, 2002, PISCATAWAY, NJ, USA,IEEE, vol. 3, 15 September 2002 (2002-09-15), pages 1337-1341, XP010611481 ISBN: 0-7803-7589-0 * the whole document * ----- | 1-16 | |

TECHNICAL FIELDS SEARCHED (Int.Cl.7)

The present search report has been drawn up for all claims

| Place of search | Date of completion of the search | Examiner |
|---|---|---|
| Munich | 10 October 2005 | Fernández Cuenca, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **EMRE TELATAR.** Capacity of Multi-antenna Gaussian Channels. *European Transactions on Telecommunications,* November 1999, vol. 10 (6), 585-595
- **D. GESBERT ; H. BÖLCSKEI ; D. A. GORE ; A. J. PAULRAJ.** MIMO wireless channels: Capacity and performance prediction. *IEEE Globecom 2000,* November 2000, 1083-1088

- **P.F. DRIESSEN ; G.J. FOSCHINI.** On the capacity formula for multiple input multiple output wireless channels: a geometric interpretation. *IEEE Trans. Comm.,* February 1999, vol. 47, 173-176
- **J-S JIANG ; M.A. INGRAM.** Distributed Source Model (DSM) for Short-Range MIMO. *IEEE Vehicular Tech. Conf.,* October 2003